# EUROPÄISCHE PATENTSCHRIFT

(11) **EP 3 663 252 B1**
(45) Veröffentlichungstag und Bekanntmachung des Hinweises auf die Patenterteilung: **04.08.2021**
(21) Anmeldenummer: 19212018.6
(22) Anmeldetag: 28.11.2019
(51) Int. Cl.: B66F 9/06, B66F 17/00

(54) **VERFAHREN ZUM BETREIBEN EINES AUTONOMEN FLURFÖRDERZEUGS UND INTRALOGISTISCHES SYSTEM MIT EINEM AUTONOMEN FLURFÖRDERZEUG**
METHOD FOR OPERATING AN AGV AND INTRALOGISTIC SYSTEM WITH AN AGV
PROCÉDÉ POUR FAIRE FONCTIONNER UN AGV ET SYSTÈME INTRALOGISTIQUE AVEC UN AGV

(30) Priorität: 04.12.2018 DE 102018130779
(43) Veröffentlichungstag der Anmeldung: 10.06.2020
(73) Patentinhaber: STILL GmbH, 22113 Hamburg (DE)
(72) Erfinder: HOWEY, Ansgar, 22926 Ahrensburg (DE)
(74) Vertreter: Patentship Patentanwaltsgesellschaft mbH

(56) Entgegenhaltungen:
- CN-A- 107 915 169
- DE-U1-020060 200 26U
- US-A1- 2011 093 134
- US-A1- 2017 374 511

## Beschreibung

Die Erfindung betrifft ein Verfahren zum Betreiben eines autonomen Flurförderzeugs, das sich selbsttätig in einer Betriebsumgebung bewegen kann, sowie ein intralogistisches System mit mindestens einem in einer Betriebsumgebung selbsttätig bewegbaren autonomen Flurförderzeug mit einer Fahrzeugsteuerungseinrichtung.

Unter einem intralogistischen System versteht man ein System, bei dem logistische Material- und Warenflüsse innerhalb eines Betriebsgeländes abgewickelt werden. Mit diesem Begriff wird eine Abgrenzung zum Warentransport außerhalb eines Werkes, z.B. durch eine Spedition, erreicht. Intralogistische Systeme umfassen insbesondere Geräte der Lager- und Fördertechnik, Hebezeuge, Flurförderzeuge, Kommissioniergeräte, Palettiergeräte, Verpackungsgeräte sowie lagerhallenspezifische Einrichtungen, wie z.B. automatische Tore. Solche Geräte und Einrichtungen bilden die technischen Prozessteilnehmer des intralogistischen Systems. Außerdem gehören zu diesem intralogistischen System auch prozessteilnehmende Betriebspersonen, z.B. Bedienpersonen von Flurförderzeugen, Lagermitarbeiter und Lagerleiter.

In der Intralogistik werden in jüngster Zeit häufig autonome Flurförderzeuge verwendet. Autonome Flurförderzeuge gehören zu den fahrerlosen Transportfahrzeugen. Unter fahrerlosen Transportfahrzeugen (FTF, englisch: Automated Guided Vehicle, AGV) versteht man flurgebundene Förderfahrzeuge mit eigenem Fahrantrieb, die automatisch gesteuert und berührungslos geführt werden.

So sind bereits autonome Flurförderzeuge im Einsatz, die sich fahrerlos durch Lagerhallen bewegen und selbsttätig Positionen zum Aufnehmen und Abgeben von Waren ansteuern. Ein solches Flurförderzeug ist z.B. aus Dokument CN107915169 bekannt, welches den Oberbegriff des Anspruchs 1 offenbart.

In all diesen Fällen sind Systeme zur Umgebungsüberwachung, insbesondere zur Kollisionsvermeidung, erforderlich, damit ein sicherer Betrieb der autonomen Flurförderzeuge gewährleistet ist und ein unbeabsichtigtes Auffahren auf ein Hindernis oder gar eine Verletzung einer auf der Fahrbahn des Flurförderfahrzeugs befindlichen Person verhindert wird.

Die gängigen Methoden zur Umgebungsüberwachung bei autonomen Flurförderzeugen basieren auf Distanzmessung mittels Laser, Ultraschall oder Radar. Dabei wird der direkte Freiraum in Fahrtrichtung des autonomen Flurförderzeugs ermittelt.

Um Kollisionen mit Personen zu vermeiden, ist es bei Erfassung einer im Fahrweg befindlichen Person in der Regel aus Sicherheitsgründen vorgesehen, dass das Flurförderzeug stehenbleibt, bis sich die Person aus dem Fahrweg fortbewegt hat. Dadurch entstehen Verzögerungen im Betriebsablauf.

Aus der DE 10 2013 215 409 A1 ist eine Projektionseinheit für eine selbsttätig mobile Plattform bekannt, die für eine Signalgebung zur Projektion des Bewegungspfades der mobilen Plattform eingerichtet ist, wobei die Projektion im räumlichen Umfeld der mobilen Plattform erfolgt. Hierzu kann insbesondere eine Laserprojektionseinheit an der mobilen Plattform montiert sein, die den errechneten und geplanten zukünftigen Bewegungspfad der mobilen Plattform auf den Fahrboden projeziert.

Die Personen im Umfeld der autonomen Plattform können auf diese Weise erkennen, in welche Richtung und auf welchem Pfad sich die mobile Plattform bewegen wird. Die Personen können daraufhin entsprechend reagieren, indem sie beispielsweise ausweichen. Durch die Projektion des Bewegungspfades ist es für die betroffenen Personen erheblich einfacher, den Fahrweg der mobilen Plattform nicht zu kreuzen, sodass sich die mobile Plattform wesentlich ungehinderter auf ihrem Bewegungspfad bewegen kann, wodurch eine deutliche Zeitersparnis beim Betrieb der mobilen Plattform erreicht wird.

Dieser Stand der Technik weist allerdings auch einige Nachteile auf:
Die bekannte Lösung kann beispielsweise bei Fahrzeugen mit geringer Bauhöhe nur bedingt zur Anwendung kommen, weil solche Fahrzeuge einen ungünstigen Projektionswinkel zur Darstellung von Informationen im Umfeld, insbesondere auf dem Boden und somit auf der Fahrbahn, aufweisen.

Außerdem besteht bei vollflächiger Nutzung der Oberseite der Plattform für eine zu transportierende Nutzlast das Problem, dass es möglicherweise keinen geeigneten Ort für eine an der Plattform angeordnete Projektionseinheit gibt, der alle Seiten des Fahrzeuges erreichen könnte.

Darüberhinaus könnte es bei der Verwendung von vielen Fahrzeugen aus Kostengründen sinnvoll sein, nicht jedes Fahrzeug mit einer Projektionseinheit ausrüsten zu müssen.

Schließlich benötigen die Projektoreinheiten entsprechend Platz und Bauraum am Fahrzeug, erhöhen das Fahrzeuggewicht und müssen mit Energie aus der Fahrzeugbatterie versorgt werden.

Der vorliegenden Erfindung liegt die Aufgabe zugrunde, ein Verfahren sowie ein intralogistisches System der eingangs genannten Art so auszugestalten, dass die geschilderten Nachteile vermieden werden können.

Diese Aufgabe wird verfahrensseitig erfindungsgemäß dadurch gelöst, dass Informationen über den Bewegungspfad, insbesondere den zukünftigen Bewegungspfad, des Flurförderzeugs an mindestens eine außerhalb des Flurförderzeugs angeordnete Signalisierungseinheit übermittelt werden, in welcher Signale erzeugt werden, die den Bewegungspfad des Flurförderzeugs in der Betriebsumgebung des Flurförderzeugs signalisieren.

Erfindungsgemäß wird also eine Signalisierungseinheit eingesetzt, die nicht auf oder an dem Flurförderzeug selbst montiert ist, sondern außerhalb des Flurförderzeugs angeordnet ist. Die Informationen über den, beispielsweise von der Fahrzeugsteuerung errechneten und geplanten, zukünftigen Bewegungspfad des Flurförderzeugs werden vom Flurförderzeug beispielsweise über eine drahtlose Datenverbindung an die externe Signalisierungseinheit gesendet. In der Signalisierungseinheit werden dann Signale zur Signalisierung des Bewegungspfades des Flurförderzeugs erzeugt. Personen in der Betriebsumgebung des Flurförderzeugs können diese Signale wahrnehmen und den Bewegungspfad des Flurförderzeugs erkennen. Somit können sie ihr Verhalten danach ausrichten. Beispielsweise können sie dem Bewegungspfad ausweichen oder darauf warten, bis das Flurförderzeug eine bestimmte Stelle passiert hat.

Die externe Signalisierungseinheit ermöglicht einen günstigen Projektionswinkel zur Darstellung des zukünftigen Bewegungspfades des Flurförderzeugs in der Betriebsumgebung.

Durch die externe Anordnung der Signalisierungseinheit wird das autonome Flurförderzeug nicht mit zusätzlichem Gewicht, Bauraum, Energieverbrauch und Kosten für eine eigene Signalisierungseinheit belastet. Dies ist insbesondere bei intralogistischen Systemen mit einer Vielzahl von autonomen Flurförderzeugen von Vorteil.

Zweckmäßigerweise wird als Signalisierungseinheit eine ortsfest in der Betriebsumgebung angeordnete Projektionseinheit verwendet, mit der die Signale auf einen Fahrbahnboden und/oder an mindestens eine Wand und/oder an eine Decke projeziert werden. Dabei kann die Projektionseinheit optische und/oder akustische Signale in den Raum übertragen.

Bevorzugt werden optische Signale projeziert, so dass der zukünftige Bewegungspfad des Flurförderzeugs angezeigt wird. Beispielsweise kann eine virtuelle Fahrroute des Flurförderzeugs auf den Fahrbahnboden projeziert werden. Hierzu kann die Fahrroute z.B. als breites Band angezeigt werden. Dabei entspricht die Breite der virtuellen Fahrroute vorteilhafterweise der Breite des Flurförderzeugs.

Eine weitere Ausgestaltungsform sieht vor, dass als Signalisierungseinheit zusätzlich oder alternativ eine in einen Fahrbahnboden integrierte Anzeigeeinheit verwendet wird, mit der die Signale auf dem Fahrbahnboden angezeigt werden.

Dabei kann die Signalisierungseinheit sowohl im Fall der Projektion als auch im Fall der im Fahrbahnboden integrierten Anzeige zur Beleuchtung des Fahrbahnbodens verwendet werden.

Die optischen Signale können durch akustische Signale ergänzt werden, um beispielsweise Personen vor Kollisionsgefahren zu warnen.

Vorzugsweise umfassen die optischen Signale auch Texte und/oder grafische Darstellungen, um den Personen in der Betriebsumgebung weitere Informationen zur Verfügung zu stellen.

Gemäß einer Weiterbildung des Erfindungsgedankens verfügt die Signalisierungseinheit über eine Scanfunktion, mit der Fahrzeuge und/oder Gegenstände und/oder Personen in der Betriebsumgebung lokalisiert werden. Dabei können für die Scanfunktion beispielsweise Funkwellen und/oder Laserstrahlen eingesetzt werden. Die so gewonnenen Daten (Scan-Daten) können dazu verwendet werden, die Navigation des Flurförderzeugs zu verbessern. Hierzu können die Scan-Daten beispielweise einer zentralen Recheneinheit übermittelt werden, die alle Abläufe in einem intralogistischen System steuert. Die Scan-Daten können auch direkt an das Flurförderzeug gesendet werden. In einer Fahrzeugsteuerungseinheit des Flurförderzeugs können die Scan-Daten ausgewertet und für die selbsttätige Navigation verwendet werden. Dabei wird vorzugsweise für die Übermittlung der Scan-Daten von der Signalisierungseinheit zum Flurförderzeug dieselbe Datenverbindung verwendet wie für die Übermittlung der Informationen über den Bewegungspfad des Flurförderzeugs (Routen-Daten) vom Flurförderzeug zur Signalisierungseinheit. Hierzu wird zweckmäßigerweise eine drahtlose Datenverbindung eingesetzt, die in beiden Richtungen Daten übertragen kann.

Vorteilhafterweise werden sowohl die Scan-Daten als auch die Routen-Daten in einer Datenverarbeitungseinheit verarbeitet. Auf diese Weise kann der Bewegungspfad aufgrund der aktuellen Scan-Daten angepasst werden, um beispielsweise Hindernissen auszuweichen. Dabei werden neue Routen-Daten errechnet, die auch der Signalisierungseinheit übermittelt werden. Somit kann die Ausweichroute ebenfalls signalisiert werden. Personen in der Betriebsumgebung des Flurförderzeugs werden auf diese Weise darüber informiert, dass das Flurförderzeug die geänderte Route fahren wird.

Die Datenverarbeitungseinheit kann beispielsweise in die Fahrzeugsteuerung des Flurförderzeugs integriert sein.

Besondere Vorteile ergeben sich, wenn die Datenverarbeitungseinheit Bestandteil der zentralen Recheneinheit des logistischen Systems ist. In diesem Fall können die Daten aller Systemteilnehmer des logistischen Systems zentral verarbeitet werden, so dass eine Gesamtsteuerung des Systems ermöglicht wird, die auch die Scan-Daten der Signalisierungseinheit und die Routen-Daten des Flurförderzeugs berücksichtigt. Insbesondere bei logistischen Systemen mit einer Vielzahl von Systemteilnehmern ist die Verwendung einer zentralen Recheneinheit vorteilhaft, weil beispielsweise nicht alle teilnehmenden Flurförderzeuge mit eigenen Datenverarbeitungseinheiten ausgestattet sein müssen.

Eine weitere bevorzugte Ausgestaltung der Erfindung sieht vor, dass als Signalisierungseinheit eine von Personen in der Betriebsumgebung tragbare Brille verwendet wird, in die die Signale als virtuelle Bilder eingeblendet werden. Derartige Brillen mit erweiterter Realität (augmented reality) sind an sich für andere Zwecke bereits bekannt. Erfindungsgemäß werden solche Brillen dafür genutzt, die Personen in der Betriebsumgebung über den geplanten Bewegungspfad des Flurförderzeugs zu informieren. Dabei wird der Bewegungspfad vorzugsweise realitätsnah in das Sichtfeld der Brille eingeblendet.

Die Erfindung betrifft ferner ein intralogistisches System mit mindestens einem in einer Betriebsumgebung selbsttätig bewegbaren autonomen Flurförderzeug mit einer Fahrzeugsteuerungseinrichtung.

Bei einem solchen System wird die gestellte Aufgabe dadurch gelöst, dass das intralogistische System mindestens eine außerhalb des Flurförderzeugs angeordnete, mit der Fahrzeugsteuerungseinrichtung des Flurförderzeugs in Wirkverbindung stehende, Signalisierungseinheit umfasst, welche zur Erzeugung von Signalen ausgebildet ist, die den Bewegungspfad in der Betriebsumgebung des Flurförderzeugs signalisieren.

Dabei steht die Signalisierungseinheit bevorzugt über eine drahtlose Datenverbindung mit der Fahrzeugsteuerungseinrichtung des Flurförderzeugs in Wirkverbindung. Die drahtlose Datenverbindung ist zweckmäßigerweise als Funkverbindung, z.B. als Bestandteil eines digitalen Funknetzes, ausgebildet. Die Informationen über den, beispielsweise von der Fahrzeugsteuerung errechneten und geplanten, zukünftigen Bewegungspfad des Flurförderzeugs werden vom Flurförderzeug beispielsweise über eine drahtlose Datenverbindung an die externe Signalisierungseinheit gesendet. In der Signalisierungseinheit werden dann Signale zur Signalisierung des Bewegungspfades des Flurförderzeugs erzeugt.

In einer besonders vorteilhaften Ausgestaltung umfasst die Signalisierungseinheit eine ortsfest in der Betriebsumgebung angeordnete Projektionseinheit, die für eine Projektion der Signale auf einen Fahrbahnboden und/oder an mindestens eine Wand und/oder an eine Decke ausgebildet ist.

Zweckmäßigerweise ist die, insbesondere als Projektionseinheit ausgebildete, Signalisierungseinheit an einer Decke über dem Bewegungspfad des Flurförderzeugs angeordnet. Auf diese Weise wird erreicht, dass der Bewegungspfad von oben her mit einem günstigen Projektionswinkel unmittelbar auf den Fahrbahnboden oder eine angrenzende Wand projeziert werden kann, ohne dass irgendwelche Gegenstände den Projektionsweg stören.

Dabei ist die Signalisierungseinheit bevorzugt als Laserprojektionseinheit ausgebildet. Dies hat den Vorteil, dass die Signale, insbesondere auch Texte und Symbole, besonders intensiv und präzise projeziert werden können.

Eine andere vorteilhafte Ausgestaltung besteht darin, dass die Signalisierungseinheit eine Scheinwerfereinheit umfasst, die für eine Beleuchtung des Fahrbahnbodens ausgebildet ist. Auf diese Weise kann auf kostengünstige Art sowohl eine Ausleuchtung der Fahrbahn bzw. eine allgemeine Beleuchtung der Betriebsumgebung als auch eine effektive Signalisierung des Bewegungspfades des Flurförderzeugs erfolgen.

Alternativ oder zusätzlich umfasst die Signalisierungseinheit vorzugsweise eine in einen Fahrbahnboden integrierte Anzeigeeinheit, die für eine Anzeige der Signale auf dem Fahrbahnboden ausgebildet ist. Hierzu ist die Signalisierungseinheit zweckmäßigerweise mit Leuchtdioden ausgestattet. Besonders vorteilhaft sind organische Leuchtdioden (englisch: organic light emitting diode, OLED), die aus leuchtenden Dünnschichtbauelementen aus organischen halbleitenden Materialien bestehen. Diese können flächig verarbeitet werden und eignen sich ganz besonders für die Integration in Fahrbahnböden.

Die Signalisierungseinheit kann auch nur an ausgewählten Streckenabschnitten des Fahrweges des Flurförderzeugs installiert sein, insbesondere an Unfallschwerpunkten und/oder Kreuzungen und/oder Gebieten mit Mischverkehr von autonomen und manuell gesteuerten Flurförderzeugen bzw. Gebieten mit Mischverkehr von autonomen Flurförderzeugen und Personen.

Um auch eine Scanfunktion der Signalisierungseinheit zur Lokalisierung von Fahrzeugen und/oder Gegenständen und/oder Personen zu ermöglichen, ist die Signalisierungseinheit bevorzugt mit mindestens einem Laserscanner ausgestattet. Zur Auswertung der Scan-Daten des Laserscanners steht der Laserscanner mit einer Datenverarbeitungseinrichtung in Wirkverbindung. Die Datenverarbeitungseinrichtung ist zweckmäßigerweise Bestandteil der zentralen Recheneinheit des logistischen Systems, so dass eine Gesamtsteuerung des Systems ermöglicht wird, die auch die Scan-Daten der Signalisierungseinheit und die Routen-Daten des Flurförderzeugs berücksichtigt. Hierzu stehen die Signalisierungseinheit und die Fahrzeugsteuerungseinrichtung des Flurförderzeugs bevorzugt über eine drahtlose Datenverbindung mit bidirektionaler Datenübertragung, insbesondere eine digitale Funkverbindung, mit der zentralen Recheneinheit des logistischen Systems in Wirkverbindung.

Eine weitere vorteilhafte Ausgestaltung des intralogistischen Systems sieht vor, dass die Signalisierungseinheit eine von Personen in der Betriebsumgebung tragbare Brille mit erweiterter Realität umfasst, die für eine Einblendung der Signale als virtuelle Bilder ausgebildet ist.

Weitere Vorteile und Einzelheiten der Erfindung werden anhand des in der schematischen Figur dargestellten Ausführungsbeispiels näher erläutert.

Die Figur zeigt ein autonomes Flurförderzeug 1, das sich selbsttätig auf einem Fahrbahnboden 6 bewegt. Zur Überwachung der Betriebsumgebung des Flurförderzeugs 1 ist am Flurförderzeug 1 ein Umgebungssensor 2, beispielsweise ein Laserscanner oder eine Kamera, angeordnet. Die Daten des Umgebungssensors 2 werden in einer Fahrzeugsteuerungseinrichtung 7 ausgewertet und zur autonomen Steuerung des Flurförderzeugs 1 verwendet.

Informationen über den geplanten Bewegungspfad des Flurförderzeugs 1 werden von der Fahrzeugsteuerungseinrichtung 7 über eine drahtlose Datenverbindung 8 an eine externe Signalisierungseinheit 3 übermittelt. Die Signalisierungseinheit 3 ist im dargestellten Ausführungsbeispiel als Projektionseinheit 3 ausgebildet und an der Decke 4 über dem Fahrbahnboden 6 montiert. Die Projektionseinheit kann beispielsweise als DMD-Projektor ausgebildet sein.

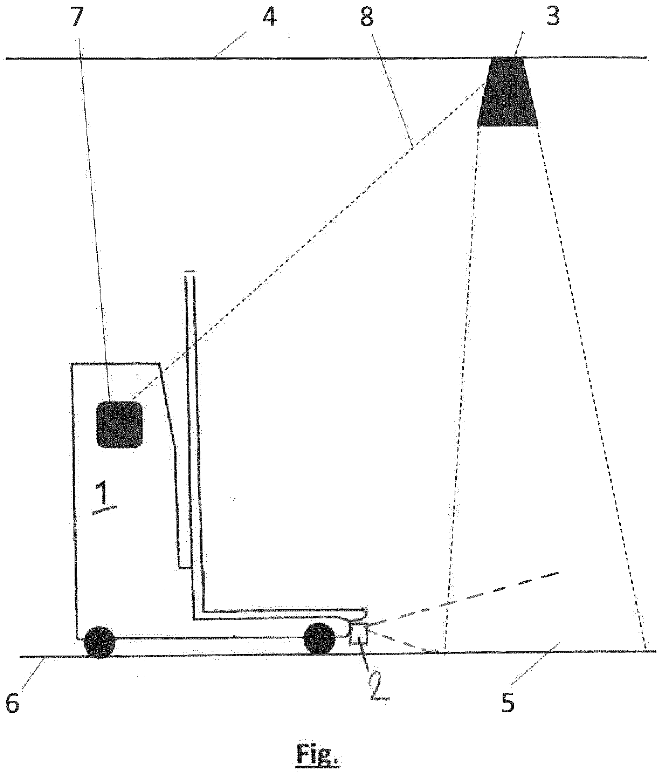

In der Projektionseinheit 3 werden Signale erzeugt, die den zukünftigen Bewegungspfad des Flurförderzeugs 1 signalisieren. Hierzu projeziert die Projektionseinheit 3 ein Bild 5 des geplanten Bewegungspfades des Flurförderzeugs 1 auf den Fahrbahnboden 6.

Personen in der Betriebsumgebung des Flurförderzeugs 1 werden auf diese Weise auf den geplanten Bewegungspfad des Flurförderzeugs 1 hingewiesen und können ihr Verhalten dementsprechend anpassen, indem sie beispielsweise diesen Bereich nicht betreten oder ausweichen.

Weiterhin kann die Projektionseinheit 3 zur allgemeinen Beleuchtung der Betriebsumgebung des Flurförderzeugs 1 dienen.

## Patentansprüche

1. Verfahren zum Betreiben eines autonomen Flurförderzeugs, das sich selbsttätig in einer Betriebsumgebung bewegen kann, **dadurch gekennzeichnet, dass** Informationen über den Bewegungspfad des Flurförderzeugs (1) an mindestens eine außerhalb des Flurförderzeugs (1) angeordnete Signalisierungseinheit (3) übermittelt werden, in welcher Signale erzeugt werden, die den Bewegungspfad des Flurförderzeugs (1) in der Betriebsumgebung des Flurförderzeugs (1) signalisieren.

2. Verfahren nach Anspruch 1, **dadurch gekennzeichnet, dass** als Signalisierungseinheit (3) eine ortsfest in der Betriebsumgebung angeordnete Projektionseinheit (3) verwendet wird, mit der die Signale auf einen Fahrbahnboden (6) und/oder an mindestens eine Wand und/oder an eine Decke projeziert werden.

3. Verfahren nach Anspruch 1 oder 2, **dadurch gekennzeichnet, dass** als Signalisierungseinheit (3) eine in einen Fahrbahnboden integrierte Anzeigeeinheit verwendet wird, mit der die Signale auf dem Fahrbahnboden (6) angezeigt werden.

4. Verfahren nach einem der Ansprüche 1 bis 3, **dadurch gekennzeichnet, dass** die Signalisierungseinheit (3) zur Beleuchtung des Fahrbahnbodens (6) verwendet wird.

5. Verfahren nach einem der Ansprüche 1 bis 4, **dadurch gekennzeichnet, dass** die Signalisierungseinheit (3) über eine Scanfunktion verfügt, mit der Fahrzeuge und/oder Gegenstände und/oder Personen in der Betriebsumgebung lokalisiert werden.

6. Verfahren nach einem der Ansprüche 1 bis 5, **dadurch gekennzeichnet, dass** als Signalisierungseinheit (3) eine von Personen in der Betriebsumgebung tragbare Brille verwendet wird, in die die Signale als virtuelle Bilder eingeblendet werden.

7. Intralogistisches System mit mindestens einem in einer Betriebsumgebung selbsttätig bewegbaren autonomen Flurförderzeug mit einer Fahrzeugsteuerungseinrichtung, **dadurch gekennzeichnet, dass** das intralogistische System mindestens eine außerhalb des Flurförderzeugs (3) angeordnete, mit der Fahrzeugsteuerungseinrichtung (7) des Flurförderzeugs in Wirkverbindung stehende, Signalisierungseinheit (3) umfasst, welche zur Erzeugung von Signalen ausgebildet ist, die den Bewegungspfad des Flurförderzeugs (1) in der Betriebsumgebung des Flurförderzeugs (1) signalisieren.

8. Intralogistisches System nach Anspruch 7, **dadurch gekennzeichnet, dass** die Signalisierungseinheit (3) über eine drahtlose Datenverbindung (8) mit der Fahrzeugsteuerungseinrichtung (7) des Flurförderzeugs (1) in Wirkverbindung steht.

9. Intralogistisches System nach Anspruch 7 oder 8, **dadurch gekennzeichnet, dass** die Signalisierungseinheit (3) eine ortsfest in der Betriebsumgebung angeordnete Projektionseinheit (3) umfasst, die für eine Projektion der Signale auf einen Fahrbahnboden (6) und/oder an mindestens eine Wand und/oder an eine Decke (4) ausgebildet ist.

10. Intralogistisches System nach einem der Ansprüche 7 bis 9, **dadurch gekennzeichnet, dass** die Signalisierungseinheit an einer Decke (4) über dem Bewegungspfad des Flurförderzeugs (1) angeordnet ist.

11. Intralogistisches System nach Anspruch 10, **dadurch gekennzeichnet, dass** die Signalisierungseinheit (3) eine Scheinwerfereinheit umfasst, die für eine Beleuchtung des Fahrbahnbodens (6) ausgebildet ist.

12. Intralogistisches System nach einem der Ansprüche 7 bis 11, **dadurch gekennzeichnet, dass** die Signalisierungseinheit (3) eine in einen Fahrbahnboden (6) integrierte Anzeigeeinheit umfasst, die für eine Anzeige der Signale auf dem Fahrbahnboden (6) ausgebildet ist.

13. Intralogistisches System nach einem der Ansprüche 7 bis 12, **dadurch gekennzeichnet, dass** die Signalisierungseinheit (3) mit Leuchtdioden ausgestattet ist.

14. Intralogistisches System nach einem der Ansprüche 7 bis 13, **dadurch gekennzeichnet, dass** die Signalisierungseinheit (3) mit mindestens einem Laserscanner ausgestattet ist.

15. Intralogistisches System nach einem der Ansprüche 7 bis 12, **dadurch gekennzeichnet, dass** die Signalisierungseinheit (3) eine von Personen in der Betriebsumgebung tragbare Brille mit erweiterter Realität umfasst, die für eine Einblendung der Signale als virtuelle Bilder ausgebildet ist.

## Claims

1. Method for operating an autonomous industrial truck, which can move independently within an operating environment, **characterized in that** information relating to the movement path of the industrial truck (1) is transmitted to at least one signalling unit (3), which is arranged outside the industrial truck (1) and in which signals are generated that signal the movement path of the industrial truck (1) within the operating environment of the industrial truck (1).

2. Method according to Claim 1, **characterized in that** the signalling unit (3) used is a projection unit (3), which is arranged in a spatially fixed manner within the operating environment and with which the signals are projected onto a driving surface (6) and/or onto at least one wall and/or onto a ceiling.

3. Method according to Claim 1 or 2, **characterized in that** the signalling unit (3) used is a display unit, which is integrated in a driving surface and with which the signals are displayed on the driving surface (6).

4. Method according to one of Claims 1 to 3, **characterized in that** the signalling unit (3) is used to illuminate the driving surface (6).

5. Method according to one of Claims 1 to 4, **characterized in that** the signalling unit (3) has a scanning function with which vehicles and/or objects and/or people within the operating environment are localized.

6. Method according to one of Claims 1 to 5, **characterized in that** the signalling unit (3) used is a pair of glasses that people within the operating environment may wear and into which the signals are superposed in the form of virtual images.

7. Intralogistics system with at least one autonomous industrial truck that is independently movable within an operating environment with a vehicle control device, **characterized in that** the intralogistics system comprises at least one signalling unit (3), which is arranged outside the industrial truck (3), is operatively connected to the vehicle control device (7) of the industrial truck, and is embodied to generate signals that signal the movement path of the industrial truck (1) within the operating environment of the industrial truck (1) .

8. Intralogistics system according to Claim 7, **characterized in that** the signalling unit (3) is operatively connected to the vehicle control device (7) of the industrial truck (1) by way of a wireless data link (8).

9. Intralogistics system according to Claim 7 or 8, **characterized in that** the signalling unit (3) comprises a projection unit (3), which is arranged in a spatially fixed manner within the operating environment and is embodied for the projection of the signals onto a driving surface (6) and/or onto at least one wall and/or onto a ceiling (4).

10. Intralogistics system according to one of Claims 7 to 9, **characterized in that** the signalling unit is arranged at a ceiling (4) over the movement path of the industrial truck (1).

11. Intralogistics system according to Claim 10, **characterized in that** the signalling unit (3) comprises a headlight unit embodied for illuminating the driving surface (6).

12. Intralogistics system according to one of Claims 7 to 11, **characterized in that** the signalling unit (3) comprises a display unit that is integrated in a driving surface (6) and is embodied for displaying the signals on the driving surface (6).

13. Intralogistics system according to one of Claims 7 to 12, **characterized in that** the signalling unit (3) is provided with light-emitting diodes.

14. Intralogistics system according to one of Claims 7 to 13, **characterized in that** the signalling unit (3) is provided with at least one laser scanner.

15. Intralogistics system according to one of Claims 7 to 12, **characterized in that** the signalling unit (3) comprises a pair of glasses with augmented reality that people within the operating environment may wear and that is embodied for the superposition of the signals in the form of virtual images.

## Revendications

1. Procédé permettant de faire fonctionner un chariot de manutention autonome qui peut se déplacer de façon automatique dans un environnement opérationnel,
**caractérisé en ce que** des informations concernant le trajet de déplacement du chariot de manutention (1) sont transmises à au moins une unité de signalisation (3) disposée à l'extérieur du chariot de manutention (1) et dans laquelle des signaux sont générés qui signalent le trajet de déplacement du chariot de manutention (1) dans l'environnement opérationnel du chariot de manutention (1).

2. Procédé selon la revendication 1, **caractérisé en ce que** comme unité de signalisation (3) une unité de projection (3) disposée de façon stationnaire dans l'environnement opérationnel est utilisée par laquelle les signaux sont projetés sur un sol de voie de circulation (6) et/ou sur au moins un mur et/ou sur un plafond.

3. Procédé selon la revendication 1 ou 2, **caractérisé en ce que** comme unité de signalisation (3) une unité d'affichage intégrée dans le sol de voie de circulation est utilisée par laquelle les signaux sont affichés sur le sol de voie de circulation (6).

4. Procédé selon l'une quelconque des revendications 1 à 3, **caractérisé en ce que** l'unité de signalisation (3) est utilisée pour éclairer le sol de voie de circulation (6).

5. Procédé selon l'une quelconque des revendications 1 à 4, **caractérisé en ce que** l'unité de signalisation (3) dispose d'une fonction de balayage permettant de localiser des véhicules et/ou des objets et/ou des personnes dans l'environnement opérationnel.

6. Procédé selon l'une quelconque des revendications 1 à 5, **caractérisé en ce que** comme unité de signalisation (3) des lunettes pouvant être portées par des personnes dans l'environnement opérationnel sont utilisées dans lesquelles les signaux sont superposés sous la forme d'images virtuelles.

7. Système de logistique interne comprenant au moins un chariot de manutention autonome pouvant se déplacer automatiquement dans un environnement opérationnel, comprenant un dispositif de commande de véhicule,
**caractérisé en ce que** le système de logistique interne comprend au moins une unité de signalisation (3) disposée à l'extérieur du chariot de manutention (3), se trouvant en relation active avec le dispositif de commande de véhicule (7) du chariot de manutention et qui est réalisée pour générer des signaux qui signalent le trajet de déplacement du chariot de manutention (1) dans l'environnement opérationnel du chariot de manutention (1).

8. Système de logistique interne selon la revendication 7, **caractérisé en ce que** l'unité de signalisation (3) se trouve en relation active avec le dispositif de commande de véhicule du chariot de manutention (1) par une liaison de données sans fil (8) .

9. Système de logistique interne selon la revendication 7 ou 8, **caractérisé en ce que** l'unité de signalisation (3) comprend une unité de projection (3) disposée de façon stationnaire dans l'environnement opérationnel et qui est réalisée pour projeter les signaux sur un sol de voie de circulation (6) et/ou sur au moins un mur et/ou sur un plafond (4).

10. Système de logistique interne selon l'une quelconque des revendications 7 à 9, **caractérisé en ce que** l'unité de signalisation est disposée sur un plafond (4) au-dessus du trajet de déplacement du chariot de manutention (1).

11. Système de logistique interne selon la revendication 10, **caractérisé en ce que** l'unité de signalisation (3) comprend une unité de phares qui est réalisée pour éclairer le sol de voie de circulation (6) .

12. Système de logistique interne selon l'une quelconque des revendications 7 à 11, **caractérisé en ce que** l'unité de signalisation (3) comprend une unité d'affichage intégrée dans un sol de voie de circulation (6) et qui est réalisée pour afficher les signaux sur le sol de voie de circulation (6).

13. Système de logistique interne selon l'une quelconque des revendications 7 à 12, **caractérisé en ce que** l'unité de signalisation (3) est équipée de diodes électroluminescentes.

14. Système de logistique interne selon l'une quelconque des revendications 7 à 13, **caractérisé en ce que** l'unité de signalisation (3) est équipée d'au moins un scanner laser.

15. Système de logistique interne selon l'une quelconque des revendications 7 à 12, **caractérisé en ce que** l'unité de signalisation (3) comprend des lunettes à réalité augmentée, pouvant être portées par des personnes et qui sont réalisées pour superposer les signaux sous la forme d'images virtuelles.
